# EUROPEAN PATENT APPLICATION

(11) **EP 4 544 926 A1**
(43) Date of publication of application: **30.04.2025**
(21) Application number: 24206581.1
(22) Date of filing: 15.10.2024
(51) Int. Cl.: A24D 3/06, A24D 3/10, D21B 1/00

(54) **FILTER FOR SMOKING ARTICLES AND FILTER PAPER FORMING THE SAME CONSISTING OF PLANT FIBRES**

(30) Priority: 26.10.2023 ES 202330880
(71) Applicant: Miquel y Costas & Miquel, S.A., 08006 Barcelona (ES)
(72) Inventor: TOSAS FUENTES, Agustín, 08006 BARCELONA (ES); FERRERÓ ARAGONÉS, Mónica, 08006 BARCELONA (ES); ALEMANY MUNNÉ, Marcel, 08006 BARCELONA (ES); DE MARISCAL RUIGÓMEZ, Pablo, 08006 BARCELONA (ES)
(74) Representative: Ungria López, Javier

(57) **Abstract**

The present invention relates to a filter paper for smoking article filters characterised in that it comprises fibres from at least one plant in a percentage equal to or greater than 70% by weight, a porosity of 1,000 to 15,000 CU, measured in accordance with ISO 2965 standard, and a basis weight of 25 to 65 g/m², measured in accordance with ISO 536 standard. It is also an object of the invention a filter for smoking articles formed from said filter paper, as well as the smoking article comprising the same.

## Description

### TECHNICAL SECTOR

The present invention belongs to the field of the paper industry. In particular, it relates to a novel filter for smoking articles, as well as to the filter paper forming the same, made from plant fibres.

### BACKGROUND OF THE INVENTION

As patent application P202230664, filed by Miquel y Costas & Miquel on 19 July 2022, describes, to solve the problem associated with the amount of cigarette butts that are discarded annually throughout the world, novel types of filters for smoking articles have recently been developed that are made from biodegradable materials, replacing cellulose acetate (plastic), that is a common component of conventional cigarette filters, which is a slowly degrading compound.

In this relation, for example, patent application P202230664 relates to a novel filter paper made from wood cellulose fibres. The invention described in said patent application provides a solution to the problem associated with this type of filters made of cellulose paper regarding the greater pressure drop they exhibit, this being an unwanted effect since, as a result, smoking difficulty is increased. In this regard, through a specific paper design, among other technical features related to its weight and porosity, a filter pressure drop similar to that of filters made with cellulose acetate is achieved.

Other alternatives that have been developed to reduce the pressure drop inherent to wood cellulose fibre paper filters and obtain smoking experiences similar to those obtained with cellulose acetate filters, are based on forming filters with a smaller amount of filter material. Nevertheless, this decrease in material leads to a decrease in the hardness of the filter, effect that is perceptible to touch by the user, who finds such filters to be softer and less "satisfactory" than cellulose acetate filters.

In what follows, the average values of different measurements carried out to analyse the characteristic properties of cellulose acetate filters and wood cellulose paper filters currently available on the market are given. In particular, cellulose acetate filters showed an average pressure drop of 74.8 mm w.c., 0.73 kPa, and a hardness of 79.7%, while the wooden paper filters showed a higher pressure drop, of 88.6 mm w.c., 0.87 kPa, and a hardness of 74.0%, noticeably lower than the hardness of cellulose acetate filters.

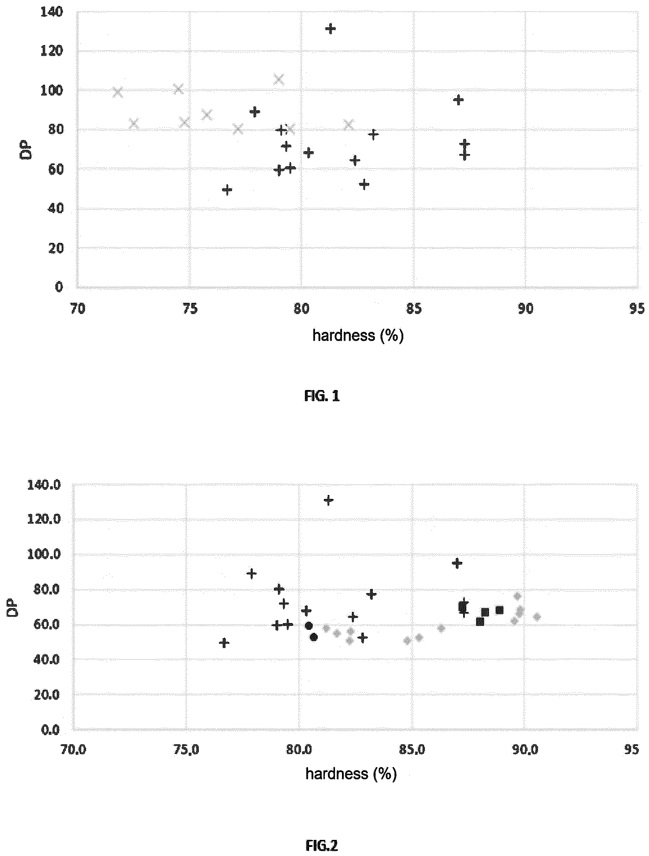

Figure 1 shows the results corresponding to the measurements carried out on cellulose acetate filters (+) and wood cellulose paper filters (x) available on the market, being 15 mm long and having a 6 mm diameter.

Patent application P202230664, mentioned above, discloses a type of wood cellulose paper filter that increases the hardness of conventional wood cellulose paper filters.

Unlike the solution proposed in patent application P202230664, the purpose of the present invention is to define a novel biodegradable filter paper and the filter comprising the same, based on plant fibres, preferably herbaceous ones. Said filter, without requiring the use of binders for its manufacture, exhibits a greater hardness than the cellulose paper filters currently available, for a pressure drop equivalent to that of cellulose acetate filters, as well as a lower environmental impact.

Within the group of plant fibres, herbaceous plants exhibit rapid and renewable growth, with shorter growth cycles than trees, and represent the only viable source of obtaining cellulose in many regions of the world. For example, hemp contains a high proportion of cellulose, grows very quickly and does not need large amounts of water or pesticides or fertilisers for its cultivation.

Other fibres that fall within the scope of this invention are flax, jute, sisal, abaca, or kenaf, among other examples known to any expert in the field.

The following references related to the object of the invention have been found in the state of the art:
International application WO2015178995 relates to a biodegradable cigarette filter, which comprises a combination of at least two types of herbaceous fibres, linked together with a binder or with a spunlacing process.

International application WO2011123320 relates to a biodegradable cigarette filter comprising a filter paper consisting of a mixture of herbaceous fibres, hemp and cotton or paper, also linked together with a bonding agent that can be flour or starch.

International application WO2010122382 relates to a cigarette filter that uses natural cotton fibres as a filtering agent and other herbaceous plants with a structural function.

It must be taken into account that the properties of hemp paper (and other fibres from plants) differ from the properties of wood paper, under equal conditions regarding basis weight and porosity. In this sense, it is known that cellulose from herbaceous plants, as well as the papers that derive therefrom, exhibits different characteristics from those of cellulose from wood.

In this regard, the present invention offers a novel biodegradable filter for smoking articles with properties equivalent to those of cellulose acetate filters, in relation to its hardness and pressure drop, but made with paper formed from plant fibres (preferably herbaceous plants).

### DESCRIPTION OF THE INVENTION

Therefore, the present invention relates first of all to a filter paper for filters of smoking articles, characterised in that it comprises or is made of fibres of at least one plant, preferably an herbaceous plant, replacing traditional cellulose acetate. In particular embodiments of the invention, the filter paper object of the invention has a fibre content equal to or greater than 70% by weight, preferably equal to or greater than 85% by weight and more preferably equal to or greater than 95% by weight, a porosity - understood as the ease of air passage through the paper - of 1,000 to 15,000 Coresta Units, hereinafter, CU, equivalent to ml/min.cm² measured at a pressure difference of 1 kPa, preferably between 2,000 and 10,000 CU and even more preferably between 3,000 and 8,000 CU, measured in accordance with ISO 2965 standard, and a basis weight, understood as the weight per unit area, from 25 to 65 g/m², preferably from 30 to 55 g/m², and more preferably from 35 to 45 g/m², measured in accordance with ISO 536 standard.

Preferably, the constituent fibres of the filter paper object of the invention can be from a preferably herbaceous plant preferably selected from hemp, linen, esparto, sisal, jute and abaca, as well as any of the combinations thereof, this selection not being limiting so that, alternatively, other types of plants may be used, preferably herbaceous.

Specifically, hemp fibre paper will be especially preferred since, in addition to exhibiting optimal properties to guarantee a proper smoking experience, offers environmental advantages derived from the characteristics that are typical in its cultivation.

Additionally, in preferred embodiments of the invention, the filter paper does not comprise any binder in its composition.

Both the porosity and the basis weight of the paper influence the permeability of the paper to air passage, permeability being understood as an indirect measure of how far apart the fibres are. Therefore, the greater the permeability, the more separated the fibres are, which have a larger contact surface with the cigarette smoke, increasing the filter pressure drop and, as a result, the retention of smoke components. Air permeability is not in itself an absolute feature, as it is associated with grammage. In this sense, for example, a 20 g/m² paper with a permeability of 5,000 CU has more associated fibres than a 40 g/m² paper with the same permeability. Furthermore, since air permeability defines the structure of paper to a certain degree, it has an impact on creping. For example, a low air permeability (less than 1,000 CU for a 36 g/m² paper) makes creping difficult, since the density and rigidity of the paper are high.

It is also an object of the invention a smoking article filter obtained from the described paper, characterised in that it comprises at least 60% by weight, preferably at least 80%, and more preferably 95% by weight of the filter paper as claimed.

Particularly, the paper filter object of the invention exhibits a hardness equal to or greater than 80%, measured with a Borgwaldt model H10 equipment and a pressure drop, measured in accordance with ISO 6565 standard, which is equivalent to that of a cellulose acetate filter of the same dimensions. Particularly, the pressure drop for a filter having a 6 mm to 8 mm diameter and being 15 mm to 22.5 mm long can be between 0.490 and 1.471 kPa, in accordance with UNE-EN ISO 6565 standard: 2011.

For purposes of this patent, hardness is understood as the resistance of the filter to its deformation under a constant pressure and is measured as percentage of deformation. Likewise, the pressure drop relates to the difference in pressure between the input air and the output air and is measured in mm of water column (mm w.c.) or kiloPascals (kPa) and is a parameter that is affected by different variables, such as the dimensions of the filter itself and its density.

The density of the filter is the amount of paper it contains per unit volume, in this case expressed in grams per cm³. For example, for a filter having a 6 mm to 8 mm diameter and being 15 mm to 22.5 mm long, the density can be between 0.120 g/cm³ and 0.250 g/cm³, preferably between 0.130 g/cm³ and 0.240 g/cm³, and more preferably between 0.140 g/cm³ and 0.230 g/cm³.

In this regard, the novel filter developed represents a significant improvement compared to the state of the art, by exhibiting a hardness equivalent to or greater than that of commercially available cellulose acetate filters, whilst maintaining a similar pressure drop and achieving a lower environmental impact.

It is important to note that the invention developed is the result of a delicate balance between the features of the paper - porosity, basis weight, etc.- and those of the filter -density, dimensions, etc.- Due to the claimed features, it has been possible to obtain filters with high hardness and pressure drops similar to those offered by commercial cellulose acetate filters.

### FIGURES

Figure 1 (state of the art) shows the graphs corresponding to the pressure drop and hardness measurements carried out on conventional cellulose acetate filters (+) and wood cellulose paper filters (x), being 15 mm long and having 6 mm diameter that are available on the market.
Figure 2 shows the data corresponding to the pressure drop and hardness measurements carried out on the hemp fibre paper filters according to the invention, in particular, 2000 CU hemp paper filters (•), 4000 CU (◆) and 7000 CU (▪), all of them being 15 mm long and having a 6 mm diameter, compared to conventional cellulose acetate filters (+), of the same dimensions, that are available on the market.

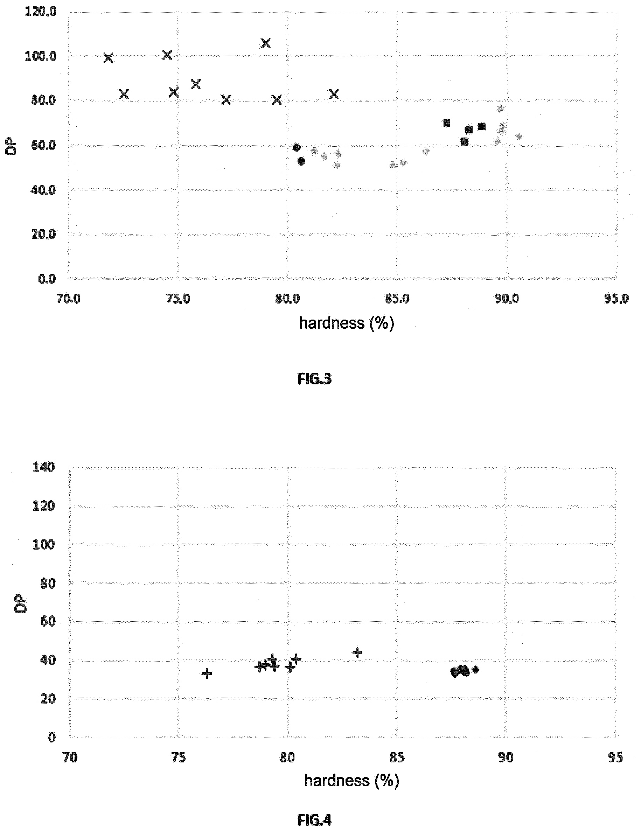

Figure 3 shows the data corresponding to the pressure drop and hardness measurements carried out on the hemp fibre paper filters according to the invention, in particular, 2000 CU (•), 4000 CU (◆) and 7000 CU (▪) hemp paper filters, all of them being 15 mm long and having a 6 mm diameter, compared to wood cellulose paper filters (x), of the same dimensions, that are available on the market.
Figure 4 shows the graphs corresponding to the pressure drop and hardness measurements carried out on the hemp fibre paper filters according to the invention, in particular, 4000 CU (◆), being 15 mm long and having an 8 mm diameter, compared to conventional cellulose acetate filters of the same dimensions (+) that are available on the market.

### DETAILED DESCRIPTION OF THE INVENTION

In order to demonstrate the properties of the developed filter, regarding its hardness and pressure drop, a set of filters with dimensions equivalent to the cellulose acetate filters that are available on the market, previously analysed, were prepared. In particular, the dimensions initially selected were 6 mm in diameter and 15 mm in length. Additionally, the effect of varying the amount of paper in the filters was analysed. For this, 40 g/m² papers made with hemp fibres and having three different porosities (2000 CU, 4000 CU and 7000 CU) were selected.

The obtained results, regarding the hardness and pressure drop of the filters, are shown in Table 1.

**Table 1: Filters being 15 mm long and having a 6 mm diameter, made with 2000 CU, 4000 CU and 7000 CU hemp paper.**

| **POROSITY (CU)** | **Density** | **Hardness, %** | | **Pressure drop, mm w.c., 15 mm** | |
|---|---|---|---|---|---|
| | **g/cm³** | *Average* | *VC* | *Average* | *VC* |
| 2000 | 0.184 | 81 (n=10) | 14.8 | 57 (0.559 kPa) (n=10) | 9.1 |
| 4000 | 0.226 | 90 (n=100) | 3.0 | 68 (0.662 kPa) (n=96) | 12.8 |
| 4000 | 0.184 | 84 (n=80) | 6.6 | 53 (0.518 kPa) (n=80) | 7.5 |
| 7000 | 0.212 | 88 (n=76) | 2.6 | 68 (0.663kPa) (n=100) | 9.6 |

| | | | | | |
|---|---|---|---|---|---|
| *VC: Variation coefficient* | | | | | |

The results show that pressure drops equivalent to that of cellulose acetate filters analysed (figure 2) and lower than that of commercial wood cellulose paper filters (figure 3) are obtained.

Tests were also carried out with larger diameter filters, specifically with 8 mm diameter, and the results obtained regarding the hardness and pressure drop of the filters, are shown in Table 2.

**Table 2: Filters being 15 mm long and having an 8 mm diameter, formed with 4000 CU hemp paper.**

| **POROSITY (CU)** | **Density** | **Hardness, %** | | **Pressure drop, mm w.c., 15 mm** | |
|---|---|---|---|---|---|
| | **g/cm³** | *Average* | *VC* | *Average* | *VC* |
| 4000 | 0.169 | 88 (n=10) | 1.1 | 35 (0.340kPa) (n=90) | 3.5 |

| | | | | | |
|---|---|---|---|---|---|
| *VC: Variation coefficient* | | | | | |

The results show that, as in 6 mm diameter filters, pressure drops equivalent to those obtained with cellulose acetate filters of the same dimensions are obtained (figure 4).

## Claims

1. A filter paper for smoking article filters, **characterised in that** it comprises fibres from at least one plant in a percentage equal to or greater than 70% by weight, a porosity of 1,000 to 15,000 CU, measured in accordance with ISO 2965 standard, and a basis weight of 25 to 65 g/m², measured in accordance with ISO 536 standard.

2. The filter paper according to claim 1, wherein the fibres are fibres of an herbaceous plant selected from a group consisting of hemp, linen, esparto, sisal, jute and abaca, as well as any of the combinations thereof.

3. A filter for smoking article, **characterised in that** it comprises at least 60% by weight of a filter paper according to claim 1 or 2.

4. The filter for smoking article, according to claim 3, wherein said filter has a hardness greater than 80% and a pressure drop between 0.490 and 1.471 kPa for a filter having a 6 mm to 8 mm diameter and being 15 mm to 22.5 mm long.

5. The filter for smoking article, according to claim 4, wherein said filter has a density between 0.120 and 0.250 g/cm³.

6. A smoking article comprising a filter according to any one of claims 3 to 5.
